# EUROPÄISCHE PATENTSCHRIFT

(11) **EP 4 111 227 B1**
(45) Veröffentlichungstag und Bekanntmachung des Hinweises auf die Patenterteilung: **08.04.2026**
(21) Anmeldenummer: 21703596.3
(22) Anmeldetag: 01.02.2021
(51) Int. Cl.: G01S 7/497, G01S 17/42, G01S 17/931

(54) **VORRICHTUNG UND VERFAHREN ZUR KALIBRIERUNG EINES LASERSCANNERS**
DEVICE AND METHOD FOR CALIBRATING A LASER SCANNER
DISPOSITIF ET PROCÉDÉ D'ÉTALONNAGE D'UN CAPTEUR NUMÉRIQUE

(30) Priorität: 27.02.2020 DE 102020001270
(43) Veröffentlichungstag der Anmeldung: 04.01.2023
(73) Patentinhaber: SEW-EURODRIVE GmbH & Co. KG, 76646 Bruchsal (DE)
(72) Erfinder: LEYER, Daniel, 69231 Rauenberg (DE); SLISKOVIC, Maja, 76275 Ettlingen (DE); SCHMIDT, Josef, 76676 Graben-Neudorf (DE)
(86) Internationale Anmeldenummer: PCT/EP2021/025039
(87) Internationale Veröffentlichungsnummer: WO 2021/170292

(56) Entgegenhaltungen:
- EP-A2- 3 176 606
- EP-B1- 3 176 606
- DE-A1- 102004 033 114
- JP-A- 2009 168 472

## Beschreibung

Die vorliegende Erfindung betrifft eine Vorrichtung zur Kalibrierung eines Laserscanners, insbesondere zur Kalibrierung eines Laserscanners eines Fahrzeugs, welche mindestens eine Reflexionseinheit zur Reflexion eines Laserstrahls des Laserscanners umfasst. Die Erfindung betrifft auch ein Verfahren zur Kalibrierung eines Laserscanners.

Es sind Fahrzeuge, insbesondere autonom fahrende Fahrzeuge, wie beispielsweise selbstfahrende mobile Transportsysteme, bekannt, welche einen oder mehrere Laserscanner aufweisen. Solche mobilen Transportsysteme dienen beispielsweise zum Transport von Gegenständen innerhalb einer technischen Anlage. Bei der technischen Anlage handelt es sich insbesondere um eine industrielle Anwendung, beispielsweise ein Produktionswerk. Ein Laserscanner sendet einen Laserstrahl aus, detektiert einen reflektierten Laserstrahl und berechnet daraus eine Entfernung zu einem Objekt, das den Laserstrahl reflektiert. Ein Laserscanner dient dem autonom fahrenden Fahrzeug insbesondere dazu, Hindernisse in der technischen Anlage zu erkennen.

Der Laserscanner des Fahrzeugs sollte derart ausgerichtet sein, dass von dem Laserscanner ausgesandte Laserstrahlen möglichst parallel zu einem Boden, auf welchem das Fahrzeug sich befindet, verlaufen. Damit wird erreicht, dass die Laserstrahlen nicht von dem Boden reflektiert werden, sondern von Objekten, insbesondere Hindernissen, in der Umgebung. Solche Objekte sind dann für die Ortung und die Navigation des Fahrzeugs verwendbar. Eine Ausrichtung des Laserscanners derart, dass die Laserstrahlen parallel zu einem Boden, also horizontal, verlaufen, wird als Kalibrierung des Laserscanners bezeichnet.

Aus der DE 10 2004 033 114 A1 ist ein Verfahren zur Kalibrierung eines Abstandsbildsensors bekannt. Dazu wird eine Vorrichtung verwendet, die Kalibrierobjekte mit drei Kalibrierflächen aufweist.

Die DE 101 16 278 A1 offenbart ein Verfahren zum Abgleich eines an einem Fahrzeug angeordneten Abstandssensors. Dazu wird eine Vorrichtung verwendet, die drei Referenzobjekte aufweist.

Aus der JP 2009 168472 A ist ein Verfahren zur Kalibrierung eines Laserscanners bekannt. Dabei wird eine Vorrichtung benutzt, die eine vertikale Fläche aufweist, deren rechte und linke Seite parallel verlaufen.

Aus der EP 3 176 606 A2 ist ein Verfahren zum Ausrichten eines Laserscanners bekannt. Die Ausrichtung des Laserscanners ist dabei um eine Nickachse und um eine Rollachse veränderbar.

Der Erfindung liegt die Aufgabe zugrunde, eine Vorrichtung und ein Verfahren zur Kalibrierung eines Laserscanners zu schaffen.

Die Aufgabe wird durch eine Vorrichtung zur Kalibrierung eines Laserscanners mit den in Anspruch 1 angegebenen Merkmalen gelöst. Vorteilhafte Ausgestaltungen und Weiterbildungen sind Gegenstand der Unteransprüche. Die Aufgabe wird auch durch ein Verfahren zur Kalibrierung eines Laserscanners mit den in Anspruch 12 angegebenen Merkmalen gelöst. Vorteilhafte Ausgestaltungen und Weiterbildungen sind Gegenstand der Unteransprüche.

Eine erfindungsgemäße Vorrichtung zur Kalibrierung eines Laserscanners, insbesondere zur Kalibrierung eines Laserscanners eines Fahrzeugs, umfasst mindestens eine Reflexionseinheit zur Reflexion eines Laserstrahls des Laserscanners. Die mindestens eine Reflexionseinheit umfasst einen ersten Schild, einen zweiten Schild und einen Schirm, wobei der erste Schild in einer Strahlrichtung zwischen dem zweiten Schild und dem Schirm angeordnet ist. Der erste Schild weist eine erste Reflexionsfläche auf, die sich zumindest annähernd rechtwinklig zu der Strahlrichtung erstreckt, und der zweite Schild weist eine zweite Reflexionsfläche aufweist, die sich zumindest annähernd rechtwinklig zu der Strahlrichtung erstreckt, und der Schirm weist eine dritte Reflexionsfläche auf, die sich zumindest annähernd rechtwinklig zu der Strahlrichtung erstreckt. Dabei ist der erste Schild in einer Vertikalrichtung derart versetzt zu dem zweiten Schild angeordnet, dass zwischen dem ersten Schild und dem zweiten Schild ein Spalt gebildet ist, der sich in die Vertikalrichtung und in eine Querrichtung erstreckt. Dabei ist der Schirm derart ausgebildet und angeordnet, dass eine Projektion des Spalts in Strahlrichtung vollständig auf die dritte Reflexionsfläche des Schirms fällt.

Die Vertikalrichtung erstreckt sich rechtwinklig zu der Strahlrichtung. Die Vertikalrichtung erstreckt sich auch rechtwinklig zu der Querrichtung. Auch die Strahlrichtung erstreckt sich rechtwinklig zu der Querrichtung. Die hier verwendeten Richtungsangaben Vertikalrichtung, Querrichtung und Strahlrichtung sind jeweils in Bezug auf die Reflexionseinheit definiert. Jede Richtung, die rechtwinklig zu der Vertikalrichtung verläuft, wird im Folgenden auch als eine horizontale Richtung bezeichnet. Die Querrichtung und die Strahlrichtung stellen somit horizontale Richtungen dar. Die Vertikalrichtung verläuft auch rechtwinklig zu einem Boden, auf welchem die Reflexionseinheit steht. Eine Ausrichtung des Laserscanners derart, dass die Laserstrahlen des Laserscanners in eine horizontale Richtung verlaufen, wird als Kalibrierung des Laserscanners bezeichnet.

Während der Kalibrierung befindet sich der Laserscanner in einem definierten Abstand in Vertikalrichtung zu einem Boden, auf dem auch die mindestens eine Reflexionseinheit steht. Der erste Schild und der zweite Schild sind dabei derart ausgerichtet, dass der Spalt sich in dem gleichen definierten Abstand in Vertikalrichtung zu dem Boden befindet wie eine Scan-Ebene des Laserscanners. Zur Kalibrierung des Laserscanners wird ein Laserstrahl des Laserscanners auf die mindestens eine Reflexionseinheit in der Strahlrichtung gerichtet, und der Laserstrahl wird in der Querrichtung entlang der mindestens eine Reflexionseinheit bewegt. Dabei wird für mehrere Positionen des Laserstrahls in der Querrichtung jeweils eine Entfernung des Laserscanners zu derjenigen Reflexionsfläche gemessen, von welcher der Laserstrahl reflektiert wird. Wenn der Laserstrahl den Spalt trifft, so wird der Laserstrahl von der dritten Reflexionsfläche des Schirms reflektiert. Der Laserstrahl des Laserscanners verläuft dann in einem Winkelbereich entlang der mindestens eine Reflexionseinheit in eine horizontale Richtung.

Die erfindungsgemäße Vorrichtung ermöglicht insbesondere eine Kalibrierung eines Laserscanners eines Fahrzeugs, wobei es sich bei dem Fahrzeug insbesondere um ein autonom fahrendes Fahrzeug, wie beispielsweise ein selbstfahrendes mobiles Transportsystem, handelt. Mittels des Laserscanners ist das autonom fahrende Fahrzeug insbesondere dazu in der Lage, Hindernisse zu erkennen. Die erfindungsgemäße Vorrichtung benötigt einen verhältnismäßig geringen Platz und gestattet eine verhältnismäßig hohe Genauigkeit bei der Kalibrierung des Laserscanners. Die Kosten für die erfindungsgemäße Vorrichtung sind dabei verhältnismäßig gering.

Erfindungsgemäß ist eine Ausdehnung der dritten Reflexionsfläche des Schirms in Vertikalrichtung größer als eine Ausdehnung des Spalts in Vertikalrichtung, und eine Ausdehnung der dritten Reflexionsfläche des Schirms in Querrichtung ist größer als eine Ausdehnung des Spalts in Querrichtung. Somit fallen auch Laserstrahlen, die leicht geneigt zu der Strahlrichtung den Spalt treffen, noch auf die dritte Reflexionsfläche des Schirms.

Gemäß einer bevorzugten Ausgestaltung der Erfindung umfasst die Vorrichtung eine erste Reflexionseinheit und eine zweite Reflexionseinheit, welche derart ausgerichtet sind, dass die Strahlrichtung der ersten Reflexionseinheit sich zumindest annähernd rechtwinklig zu der Strahlrichtung der zweiten Reflexionseinheit erstreckt. Durch diesen zumindest annähernd rechtwinkligen Versatz der beiden Reflexionseinheiten zueinander ist die Kalibrierung des Laserscanners für unterschiedliche Abstrahlwinkel der Laserstrahlen des Laserscanners und in Bezug zu zwei horizontalen, zueinander orthogonalen Achsen durchführbar. Wenn der Laserstrahl die Spalte von beiden Reflexionseinheiten trifft, so wird der Laserstrahl von den dritten Reflexionsflächen der Schirme von beiden Reflexionseinheiten reflektiert. Der Laserstrahl des Laserscanners verläuft dann in einem Winkelbereich von über 90° in eine horizontale Richtung.

Vorzugsweise sind dabei die erste Reflexionseinheit und die zweite Reflexionseinheit derart ausgerichtet, dass die Strahlrichtung der ersten Reflexionseinheit sich zumindest annähernd parallel zu der Querrichtung der zweiten Reflexionseinheit erstreckt. Durch diesen zumindest annähernd rechtwinkligen Versatz der beiden Reflexionseinheiten zueinander ist die Kalibrierung des Laserscanners für unterschiedliche Abstrahlwinkel der Laserstrahlen des Laserscanners und relativ zu zwei horizontalen, zueinander orthogonalen Achsen durchführbar.

Weiter vorzugsweise sind die erste Reflexionseinheit und die zweite Reflexionseinheit derart ausgerichtet, dass die Vertikalrichtung der ersten Reflexionseinheit sich parallel zu der Vertikalrichtung der zweiten Reflexionseinheit erstreckt. Durch diese Anordnung der beiden Reflexionseinheiten zueinander ist die Kalibrierung des Laserscanners für unterschiedliche Abstrahlwinkel der Laserstrahlen des Laserscanners und in Bezug zu zwei horizontalen, zueinander orthogonalen Achsen durchführbar.

Vorteilhaft sind die erste Reflexionseinheit und die zweite Reflexionseinheit derart ausgerichtet, dass der Spalt der ersten Reflexionseinheit und der Spalt der zweiten Reflexionseinheit in der Vertikalrichtung miteinander fluchten. Wenn die beiden Reflexionseinheiten auf einem gemeinsamen Boden stehen, so sind die Spalte der Reflexionseinheiten somit gleich weit von dem Boden entfernt, und die Laserstrahlen des Laserscanners treffen beide Spalte von beiden Reflexionseinheiten.

Gemäß einer vorteilhaften Weiterbildung der Erfindung weist die mindestens eine Reflexionseinheit mindestens einen Abstandshalter auf, welcher derart angeordnet ist, dass der erste Schild und der Schirm in der Strahlrichtung um einen ersten Abstand versetzt zueinander angeordnet sind. Dadurch ist die Kalibrierung des Laserscanners mit erhöhter Präzision durchführbar. Ferner ist der mindestens einen Abstandshalter zur mechanischen Befestigung des Schirms einsetzbar.

Gemäß einer vorteilhaften Ausgestaltung der Erfindung weist die mindestens eine Reflexionseinheit mindestens einen Fuß auf, welcher sich vorwiegend in die Vertikalrichtung erstreckt, und welcher derart angeordnet ist, dass der erste Schild und der zweite Schild in der Strahlrichtung um einen zweiten Abstand versetzt zueinander angeordnet sind. Dadurch ist die Kalibrierung des Laserscanners mit erhöhter Präzision durchführbar. Ferner dient der mindestens ein Fuß zur mechanischen Befestigung der Schilde.

Gemäß einer vorteilhaften Weiterbildung der Erfindung weist die mindestens eine Reflexionseinheit mindestens eine Blende auf, welche in der Querrichtung neben dem zweiten Schild und/oder neben dem ersten Schild angeordnet ist. Dabei weist die mindestens eine Blende mindestens zwei Reflexionsflächen auf, welche geneigt zueinander angeordnet sind. Durch die Blende sind auch Laserstrahlen des Laserscanners reflektierbar, die in Querrichtung seitlich neben dem ersten Schild oder neben dem zweiten Schild auftreffen. Die zueinander geneigten Reflexionsflächen weisen variierende Entfernungen zu dem Laserscanner auf und vereinfachen ein Auffinden der mindestens eine Reflexionseinheit für den Laserstrahl.

Gemäß einer vorteilhaften Weiterbildung der Erfindung umfasst die erste Reflexionsfläche des ersten Schildes und/oder die zweite Reflexionsfläche des zweiten Schildes einen ersten Reflexionsbereich und einen zweiten Reflexionsbereich, wobei die Reflexionsbereiche verschiedenartige Reflexionseigenschaften, insbesondere verschiedenartige Farben und/oder verschiedenartige Oberflächenmaterialien, aufweisen. Es hat sich gezeigt, dass durch verschiedenartige Reflexionseigenschaften von Reflexionsbereichen unterschiedliche Entfernungen zu dem Laserscanner simulierbar sind. Die Reflexionsbereiche mit den verschiedenartigen Reflexionseigenschaften simulieren somit variierende Entfernungen zu dem Laserscanner und vereinfachen ein Auffinden der Reflexionsfläche.

Gemäß einer vorteilhaften Weiterbildung der Erfindung sind die erste Reflexionsfläche des ersten Schildes und/oder der erste Reflexionsbereich der zweiten Reflexionsfläche des zweiten Schildes mit schwarzem Schaumstoff verkleidet.

Gemäß einer vorteilhaften Weiterbildung der Erfindung sind zumindest die Kanten des ersten Schildes und/oder die Kanten des zweiten Schildes angrenzend an den Spalt der Reflexionseinheit mit schwarzem Schaumstoff verkleidet.

Gemäß einem erfindungsgemäßen Verfahren zur Kalibrierung eines Laserscanners, insbesondere zur Kalibrierung eines Laserscanners eines Fahrzeugs, mittels einer erfindungsgenmäßen Vorrichtung wird ein Laserstrahl des Laserscanners auf die mindestens eine Reflexionseinheit zumindest annähernd in der Strahlrichtung gerichtet, und der Laserstrahl wird in der Querrichtung entlang der mindestens eine Reflexionseinheit bewegt. Dabei wird für mehrere Positionen des Laserstrahls in der Querrichtung jeweils eine Entfernung des Laserscanners zu derjenigen Reflexionsfläche gemessen, von welcher der Laserstrahl reflektiert wird.

Wenn der Laserstrahl den ersten Schild trifft, so wird der Laserstrahl von der ersten Reflexionsfläche des ersten Schilds reflektiert. Wenn der Laserstrahl den zweiten Schild trifft, so wird der Laserstrahl von der zweiten Reflexionsfläche des zweiten Schilds reflektiert. Wenn der Laserstrahl den Spalt trifft, so wird der Laserstrahl von der dritten Reflexionsfläche des Schirms reflektiert. Wenn der Laserstrahl einen Fuß der Reflexionseinheit trifft, so wird der Laserstrahl von dem Fuß der Reflexionseinheit reflektiert.

Während der Kalibrierung befindet sich der Laserscanner in Vertikalrichtung in einem definierten Abstand zu einem Boden, auf dem auch die mindestens eine Reflexionseinheit steht. Der erste Schild und der zweite Schild sind dabei derart ausgerichtet, dass der Spalt, insbesondere eine Mitte des Spalts, sich in Vertikalrichtung in dem gleichen definierten Abstand zu dem Boden befindet. Während der Kalibrierung befindet sich der Laserscanner auch in Strahlrichtung in einem definierten Abstand zu der Reflexionseinheit.

Der Abstand des Laserscanners in Strahlrichtung zu der Reflexionseinheit ist dabei signifikant größer als eine Ausdehnung der Reflexionseinheit in Querrichtung. Eine Entfernung des Laserscanners zu einem zentralen Bereich einer Reflexionsfläche ist somit nur unwesentlich kleiner als eine Entfernung des Laserscanners zu einem Randbereich der besagten Reflexionsfläche. Somit ist eine Entfernung des Laserscanners in Strahlrichtung zu einer Reflexionsfläche der Reflexionseinheit als annähernd konstant anzusehen. Falls der Abstand des Laserscanners in Strahlrichtung zu der Reflexionseinheit in einer ähnlichen Größenordnung wie die Ausdehnung der Reflexionseinheit in Querrichtung liegt, so ist die besagte Näherung nicht ausreichend genau. In diesem Fall bietet es sich an, die von dem Laserscanner gelieferten Polarkoordinaten, nämlich Abstrahlwinkel und Entfernung, in kartesische Koordinaten, nämlich Position in Querrichtung und Entfernung in Strahlrichtung, umzurechnen.

Eine Entfernung des Laserscanners zu der zweiten Reflexionsfläche ist kleiner als eine Entfernung des Laserscanners zu dem Fuß. Eine Entfernung des Laserscanners zu dem Fuß ist kleiner als eine Entfernung des Laserscanners zu der ersten Reflexionsfläche. Eine Entfernung des Laserscanners zu der ersten Reflexionsfläche ist kleiner als eine Entfernung des Laserscanners zu der dritten Reflexionsfläche. Die jeweilige Entfernung des Laserscanners zu den einzelnen Reflexionsflächen ist bekannt.

Aus den gemessenen Entfernungen des Laserscanners zu der jeweiligen Reflexionsfläche wird eine Ausrichtung des Laserscanners ermittelt. Wenn der Laserstrahl von der ersten Reflexionsfläche des ersten Schilds reflektiert wird, so ist der Laserscanner in Vertikalrichtung nach oben, also von dem Boden weg, geneigt. Wenn der Laserstrahl von der zweiten Reflexionsfläche des zweiten Schilds reflektiert wird, so ist der Laserscanner in Vertikalrichtung nach unten, also auf den Boden zu, geneigt. Wenn der Laserstrahl von der dritten Reflexionsfläche des Schirms reflektiert wird, so verläuft der Laserstrahl in eine horizontale Richtung, und der Laserscanner ist horizontal ausgerichtet.

Das erfindungsgemäße Verfahren gestattet insbesondere eine Kalibrierung eines Laserscanners eines Fahrzeugs, wobei es sich bei dem Fahrzeug insbesondere um ein autonom fahrendes Fahrzeug, wie beispielsweise ein selbstfahrendes mobiles Transportsystem, handelt. Mittels des Laserscanners ist das autonom fahrende Fahrzeug insbesondere dazu in der Lage, Hindernisse zu erkennen. Das erfindungsgemäße Verfahren ermöglicht eine verhältnismäßig hohe Genauigkeit bei der Kalibrierung des Laserscanners und benötigt einen verhältnismäßig geringen Zeitaufwand.

Gemäß einer bevorzugten Ausgestaltung der Erfindung umfasst die Vorrichtung eine erste Reflexionseinheit und eine zweite Reflexionseinheit, welche derart ausgerichtet sind, dass die Strahlrichtung der ersten Reflexionseinheit sich zumindest annähernd rechtwinklig zu der Strahlrichtung der zweiten Reflexionseinheit erstreckt. Dabei wird der Laserstrahl des Laserscanners auf die erste Reflexionseinheit zumindest annähernd in der Strahlrichtung der ersten Reflexionseinheit gerichtet, und der Laserstrahl wird in der Querrichtung der ersten Reflexionseinheit entlang der ersten Reflexionseinheit bewegt. Dabei wird für mehrere Positionen des Laserstrahls in der Querrichtung jeweils eine Entfernung des Laserscanners zu derjenigen Reflexionsfläche der ersten Reflexionseinheit gemessen, von welcher der Laserstrahl reflektiert wird. Auch wird der Laserstrahl des Laserscanners auf die zweite Reflexionseinheit zumindest annähernd in der Strahlrichtung der zweiten Reflexionseinheit gerichtet, und der Laserstrahl wird in der Querrichtung der zweiten Reflexionseinheit entlang der zweiten Reflexionseinheit bewegt. Dabei wird für mehrere Positionen des Laserstrahls in der Querrichtung jeweils eine Entfernung des Laserscanners zu derjenigen Reflexionsfläche der zweiten Reflexionseinheit gemessen, von welcher der Laserstrahl reflektiert wird.

Durch diesen zumindest annähernd rechtwinkligen Versatz der beiden Reflexionseinheiten zueinander wird die Kalibrierung des Laserscanners für unterschiedliche Abstrahlwinkel der Laserstrahlen des Laserscanners durchgeführt. Wenn der Laserstrahl die Spalte von beiden Reflexionseinheiten trifft, so wird der Laserstrahl von den dritten Reflexionsflächen der Schirme von beiden Reflexionseinheiten reflektiert. Der Laserstrahl des Laserscanners verläuft dann in einem Winkelbereich von über 90° in eine horizontale Richtung.

Gemäß einer vorteilhaften Weiterbildung der Erfindung wird die ermittelte Ausrichtung des Laserscanners optisch und/oder akustisch dargestellt. Es wird also optisch und/oder akustisch dargestellt, ob der Laserscanner in Vertikalrichtung nach oben, also von dem Boden weg, geneigt ist, oder ob der Laserscanner in Vertikalrichtung nach unten, also auf den Boden zu, geneigt ist, oder ob der Laserscanner horizontal ausgerichtet ist.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung einer Vorrichtung zur Kalibrierung eines Laserscanners,
- Figur 2:: eine Draufsicht auf eine Reflexionseinheit,
- Figur 3:: eine Seitenansicht einer Reflexionseinheit,
- Figur 4:: eine Frontansicht einer Reflexionseinheit,
- Figur 5:: eine Draufsicht auf eine Reflexionseinheit gemäß einer ersten Abwandlung,
- Figur 6:: eine perspektivische Darstellung einer Reflexionseinheit gemäß einer zweiten Abwandlung,
- Figur 7:: ein erstes Diagramm mit gemessenen Entfernungen,
- Figur 8:: ein zweites Diagramm mit gemessenen Entfernungen und
- Figur 9:: ein drittes Diagramm mit gemessenen Entfernungen.

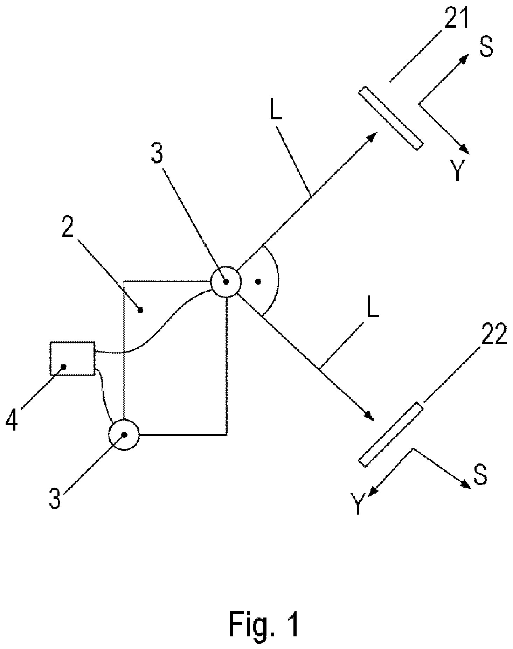

Figur 1 zeigt eine schematische Darstellung einer Vorrichtung zur Kalibrierung eines Laserscanners 3 eines Fahrzeugs 2. Bei dem Fahrzeug 2 handelt es sich vorliegend um ein autonom fahrendes Fahrzeug 2, insbesondere um ein selbstfahrendes mobiles Transportsystem. Das Fahrzeug 2 weist einen annähernd rechteckigen Grundriss auf. An zwei diagonal gegenüberliegenden Ecken des Fahrzeugs 2 ist jeweils ein Laserscanner 3 angeordnet. Jeder der Laserscanner 3 sendet einen Laserstrahl L aus, detektiert einen reflektierten Laserstrahl L, und berechnet daraus eine Entfernung D zu einem Objekt, das den Laserstrahl L reflektiert. Jeder von den Laserscannern 3 ausgesendeten Laserstrahlen L wird in einem Winkelbereich von etwa 270° bewegt.

Die Laserscanner 3 sind mit einem Digitalrechner 4 verbunden. Während einer Kalibrierung der Laserscanner 3 werden Daten, insbesondere Daten über gemessene Entfernungen D zu Objekten, von den Laserscannern 3 zu dem Digitalrechner 4 übertragen. Der Digitalrechner 4 ermittelt aus den gemessenen Entfernungen D eine Ausrichtung des Laserscanners 3 und stellt die ermittelte Ausrichtung des Laserscanners 3 optisch sowie akustisch dar.

Die Vorrichtung umfasst eine erste Reflexionseinheit 21 zur Reflexion eines Laserstrahls L des Laserscanners 3 und eine zweite Reflexionseinheit 22 zur Reflexion eines Laserstrahls L des Laserscanners 3. Das Fahrzeug 2 und die Reflexionseinheiten 21, 22 stehen auf einem ebenen Boden. Die Reflexionseinheiten 21, 22 sind Objekte, die Laserstrahlen L reflektieren.

Jede der Reflexionseinheiten 21, 22 weist eine Frontseite auf, welche sich zumindest annähernd rechtwinklig zu einer jeweiligen Strahlrichtung S erstreckt. Eine jeweilige Querrichtung Y erstreckt sich rechtwinklig zu der jeweiligen Strahlrichtung S. Eine jeweilig Vertikalrichtung Z erstreckt sich rechtwinklig zu der jeweiligen Strahlrichtung S und rechtwinklig zu der jeweiligen Querrichtung Y. Die besagten Richtungsangaben Vertikalrichtung Z, Querrichtung Y und Strahlrichtung S sind jeweils in Bezug auf die jeweilige Reflexionseinheit 21, 22 definiert. Vorliegend erstrecken sich die Vertikalrichtungen Z der Reflexionseinheiten 21, 22 parallel zueinander und rechtwinklig zu dem Boden, auf welchem die Reflexionseinheiten 21, 22 und das Fahrzeug 2 stehen.

Jede der Reflexionseinheiten 21, 22 ist derart ausgerichtet, dass ein von dem einen Laserscanner 3 des Fahrzeugs 2 ausgesendeter Laserstrahl L, der die Frontseite der jeweiligen Reflexionseinheit 21, 22 in der jeweiligen Querrichtung Y mittig trifft, zumindest annähernd in die jeweilige Strahlrichtung S verläuft. In einem bestimmten Abstrahlwinkel trifft der Laserstrahl L also zumindest annähernd rechtwinklig auf die Frontseite der jeweiligen Reflexionseinheit 21, 22.

Die Strahlrichtung S der ersten Reflexionseinheit 21 erstreckt sich zumindest annähernd rechtwinklig zu der Strahlrichtung S der zweiten Reflexionseinheit 22. Die Strahlrichtung S der ersten Reflexionseinheit 21 erstreckt sich zumindest annähernd parallel zu der Querrichtung Y der zweiten Reflexionseinheit 22. Ein Abstrahlwinkel, in welchem der Laserstrahl L zumindest annähernd rechtwinklig auf die Frontseite der ersten Reflexionseinheit 21 trifft, ist somit um zumindest annähernd 90° zu einem Abstrahlwinkel, in welchem der Laserstrahl L zumindest annähernd rechtwinklig auf die Frontseite der zweiten Reflexionseinheit 22 trifft, versetzt.

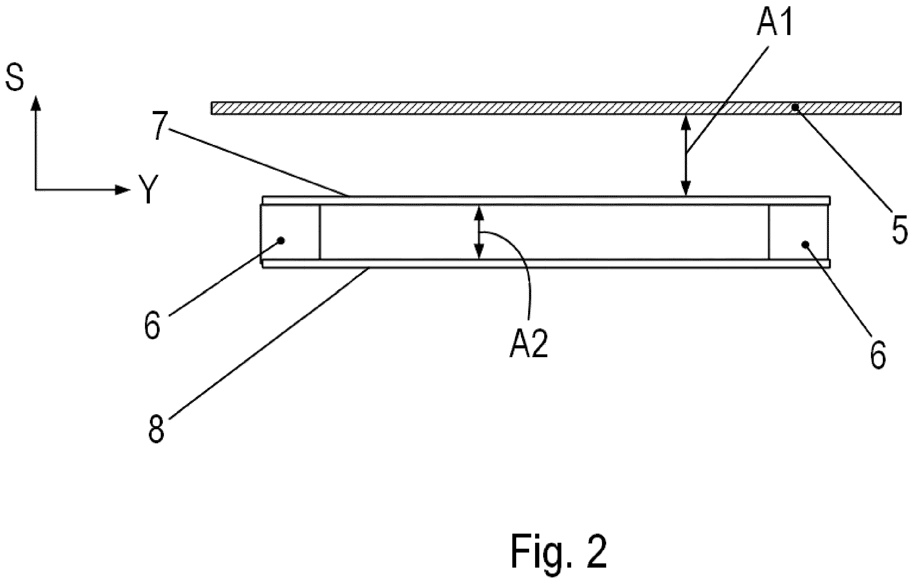

Figur 2 zeigt eine Draufsicht auf eine der in Figur 1 gezeigten Reflexionseinheiten 21, 22. Die beiden Reflexionseinheiten 21, 22 sind identisch ausgestaltet. Die Reflexionseinheit 21, 22 umfasst einen ersten Schild 7, einen zweiten Schild 8 und einen Schirm 5. Der erste Schild 7 ist in Strahlrichtung S zwischen dem zweiten Schild 8 und dem Schirm 5 angeordnet. Der erste Schild 7 und der Schirm 5 sind in der Strahlrichtung S um einen ersten Abstand A1 versetzt zueinander angeordnet. Der erste Schild 7 und der zweite Schild 8 sind in der Strahlrichtung S um einen zweiten Abstand A2 versetzt zueinander angeordnet.

Die Reflexionseinheit 21, 22 weist zwei Füße 6 auf, welche sich vorwiegend in die Vertikalrichtung Z erstrecken. Die Schilde 7, 8 sind an den beiden Füßen 6 befestigt, wobei die Füße 6 in der Strahlrichtung S zwischen dem ersten Schild 7 und dem zweiten Schild 8 angeordnet sind. Die beiden Füße 6 sind in Querrichtung Y versetzt zueinander angeordnet. Eine Ausdehnung der beiden Füße 6 in Strahlrichtung entspricht annähernd dem zweiten Abstand A2.

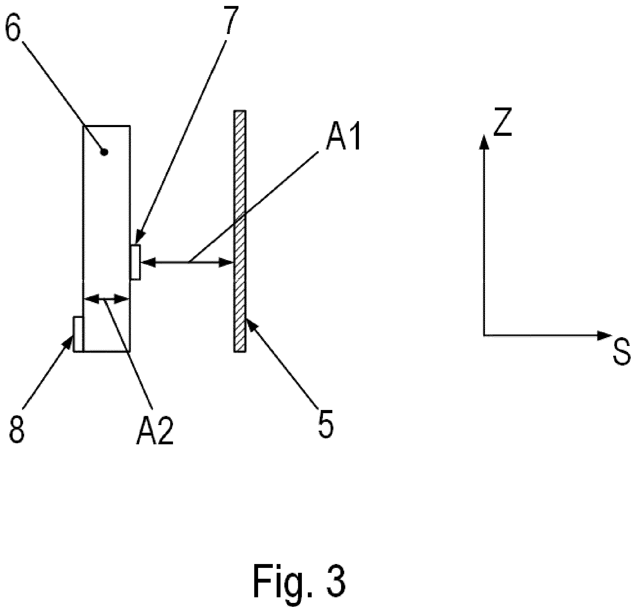

Figur 3 zeigt eine Seitenansicht einer Reflexionseinheit 21, 22. Der erste Schild 7 ist in Vertikalrichtung Z versetzt zu dem zweiten Schild 8 angeordnet. Die Schilde 7, 8 sind an in Strahlrichtung S gegenüberliegenden Seiten der Füße 6 befestigt.

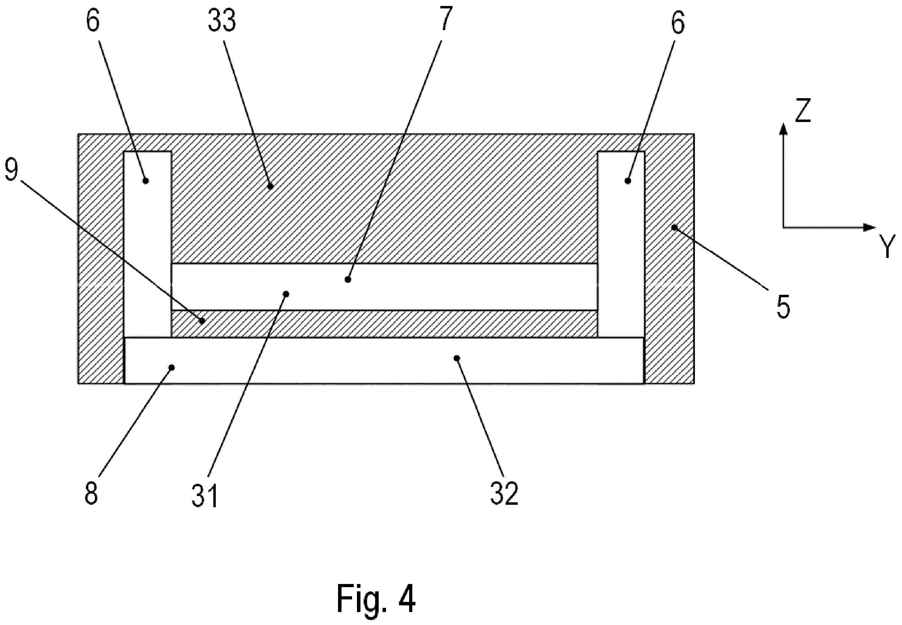

Figur 4 zeigt eine Frontansicht, also eine Sicht auf eine Frontseite, einer Reflexionseinheit 21, 22. Der erste Schild 7 weist eine erste Reflexionsfläche 31 auf, die sich zumindest annähernd rechtwinklig zu der Strahlrichtung S erstreckt. Der zweite Schild 8 weist eine zweite Reflexionsfläche 32 auf, die sich ebenfalls zumindest annähernd rechtwinklig zu der Strahlrichtung S erstreckt. Der Schirm 5 weist eine dritte Reflexionsfläche 33 auf, die sich auch zumindest annähernd rechtwinklig zu der Strahlrichtung S erstreckt.

Der erste Schild 7 ist in Vertikalrichtung Z derart versetzt zu dem zweiten Schild 8 angeordnet, dass zwischen dem ersten Schild 7 und dem zweiten Schild 8 ein Spalt 9 gebildet ist, der sich in Vertikalrichtung Z und in Querrichtung Y erstreckt. In Querrichtung Y ist der Spalt 9 von den beiden Füßen 6 begrenzt. Die erste Reflexionseinheit 21 und die zweite Reflexionseinheit 22, die in Figur 1 gezeigt sind, sind derart ausgerichtet, dass der Spalt 9 der ersten Reflexionseinheit 21 und der Spalt 9 der zweiten Reflexionseinheit 22 in Vertikalrichtung Z miteinander fluchten.

Der Schirm 5 ist derart ausgebildet und angeordnet, dass eine Projektion des Spalts 9 in Strahlrichtung S vollständig auf die dritte Reflexionsfläche 33 des Schirms 5 fällt. Eine Ausdehnung der dritten Reflexionsfläche 33 des Schirms 5 in Vertikalrichtung Z ist größer als eine Ausdehnung des Spalts 9 in Vertikalrichtung Z, und eine Ausdehnung der dritten Reflexionsfläche 31 des Schirms 5 in Querrichtung Y ist größer als eine Ausdehnung des Spalts 9 in Querrichtung Y.

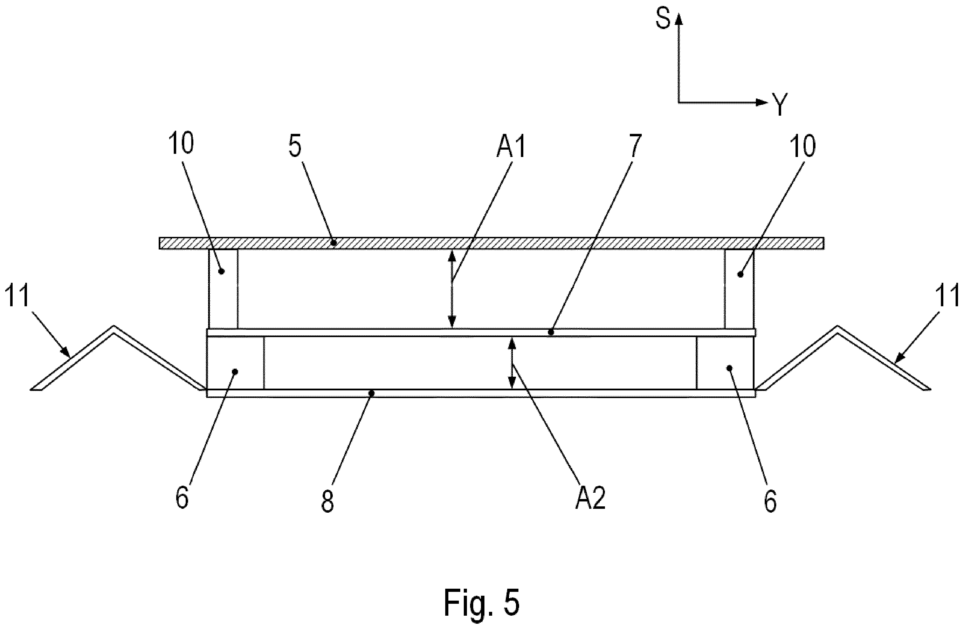

Figur 5 zeigt eine Draufsicht auf eine Reflexionseinheit 21, 22 gemäß einer ersten Abwandlung. Die Reflexionseinheit 21, 22 weist zwei Abstandshalter 10 auf, welche derart angeordnet sind, dass der erste Schild 7 und der Schirm 5 in Strahlrichtung S um den ersten Abstand A1 versetzt zueinander angeordnet sind. Die beiden Abstandshalter 10 sind in der Strahlrichtung S jeweils zwischen einem der Füße 6 und dem Schirm 5 angeordnet.

Die Reflexionseinheit 21, 22 weist auch zwei Blenden 11 auf, welche in Querrichtung Y neben dem zweiten Schild 8 sowie neben dem ersten Schild 7 angeordnet sind. Die Schilde 7, 8 und die Füße 6 sind also in Querrichtung Y zwischen den beiden Blenden 11 angeordnet. Die beiden Blenden 11 weisen jeweils zwei Reflexionsflächen auf, welche geneigt zueinander angeordnet sind. Beide Reflexionsflächen der Blenden 11 verlauf jeweils parallel zu der Vertikalrichtung Z. Beide Reflexionsflächen der Blenden 11 verlauf jeweils geneigt zu der Strahlrichtung S und geneigt zu der Querrichtung Y.

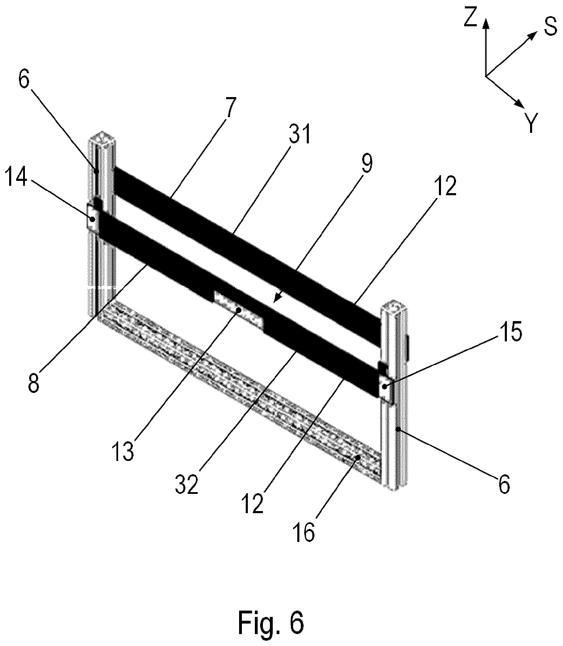

Figur 6 zeigt eine perspektivische Darstellung einer Reflexionseinheit 21, 22 gemäß einer zweiten Abwandlung. Die Reflexionseinheit 21, 22 umfasst neben dem ersten Schild 7, dem zweiten Schild 8 und den beiden Füßen 6 auch einen Schirm 5, welcher hier jedoch nicht dargestellt ist. Die Reflexionseinheit 21, 22 umfasst ferner eine Querstrebe 16, welche an den Füßen 6 befestigt ist und sich in Querrichtung Y zwischen den Füßen 6 erstreckt. Die Querstrebe 16 dient zur mechanischen Stabilisierung der Reflexionseinheit 21, 22.

Die erste Reflexionsfläche 31 des ersten Schildes 7 weist einen einheitlichen Reflexionsbereich auf, welcher eine Oberfläche eines schwarzen ESD-Schaumstoffs ist. Die zweite Reflexionsfläche 32 des zweiten Schildes 8 umfasst einen ersten Reflexionsbereich 12, einen zweiten Reflexionsbereich 13, einen dritten Reflexionsbereich 14 und einen vierten Reflexionsbereich 15.

Der erste Reflexionsbereich 12 ist eine Oberfläche eines schwarzen ESD-Schaumstoffs. Der zweite Reflexionsbereich 13, der dritte Reflexionsbereich 14 und der vierte Reflexionsbereich 15 sind jeweils Oberflächen eines Aluminiumblechs. Der erste Reflexionsbereich 12 weist somit andere Reflexionseigenschaften für Laserstrahlen L auf als die übrigen Reflexionsbereiche 13, 14, 15 des zweiten Schildes 8.

Der dritte Reflexionsbereich 14 befindet sich in Querrichtung Y an dem einen Rand des zweiten Schildes 8 vor dem einen Fuß 6. Der vierte Reflexionsbereich 15 befindet sich in Querrichtung Y an dem anderen Rand des zweiten Schildes 8 vor dem anderen Fuß 6. Der erste Reflexionsbereich 12 erstreckt sich in Querrichtung Y zwischen den Füßen 6. Der zweite Reflexionsbereich 13 befindet sich mittig zwischen den Füßen 6 und erstreckt sich in Querrichtung Y über einen Teil der Ausdehnung des ersten Reflexionsbereichs 12.

Zur Kalibrierung eines der in Figur 1 dargestellten Laserscanner 3 wird ein Laserstrahl L des besagten Laserscanners 3 auf eine in Figur 6 dargestellte Reflexionseinheit 21, 22 gerichtet. Selbstverständlich ist auch eine der in den Figuren 2 bis 5 dargestellten Reflexionseinheiten 21, 22 zur Kalibrierung des Laserscanner 3 geeignet. Der Laserstrahl L wird dabei in der Querrichtung Y entlang der Reflexionseinheit 21, 22 bewegt. Dabei durchläuft der Laserstrahl L einen Bereich von Abstrahlwinkeln. Jede Position P des Laserstrahls L in der Querrichtung Y entspricht dabei einem bestimmten Abstrahlwinkel des Laserstrahls L. Für mehrere Positionen P des Laserstrahls L in der Querrichtung Y wird jeweils eine Entfernung D des Laserscanners 3 zu derjenigen Reflexionsfläche 31, 32, 33 gemessen, von welcher der Laserstrahl L reflektiert wird. Aus den gemessenen Entfernungen D wird anschließend eine Ausrichtung des Laserscanners 3 ermittelt.

In Querrichtung Y in der Mitte der Reflexionseinheit 21, 22 verläuft der Laserstrahl L zumindest annähernd in Strahlrichtung S und trifft dort zumindest annähernd rechtwinklig auf die Reflexionseinheit 21, 22. Wenn ein Abstand des Laserscanners 3 in Strahlrichtung S zu der Reflexionseinheit 21, 22 signifikant größer ist als eine Ausdehnung der Reflexionseinheit 21, 22 in Querrichtung Y, so ist der Abstrahlwinkel des Laserstrahls L annähernd proportional zu der Position P des Laserstrahls L in der Querrichtung Y. Falls diese Näherung nicht ausreichend genau ist, so sind die von dem Laserscanner 3 gelieferten Polarkoordinaten, nämlich Abstrahlwinkel und Entfernung D, in kartesische Koordinaten, nämlich Position P in Querrichtung Y und Entfernung D in Strahlrichtung S, umzurechnen.

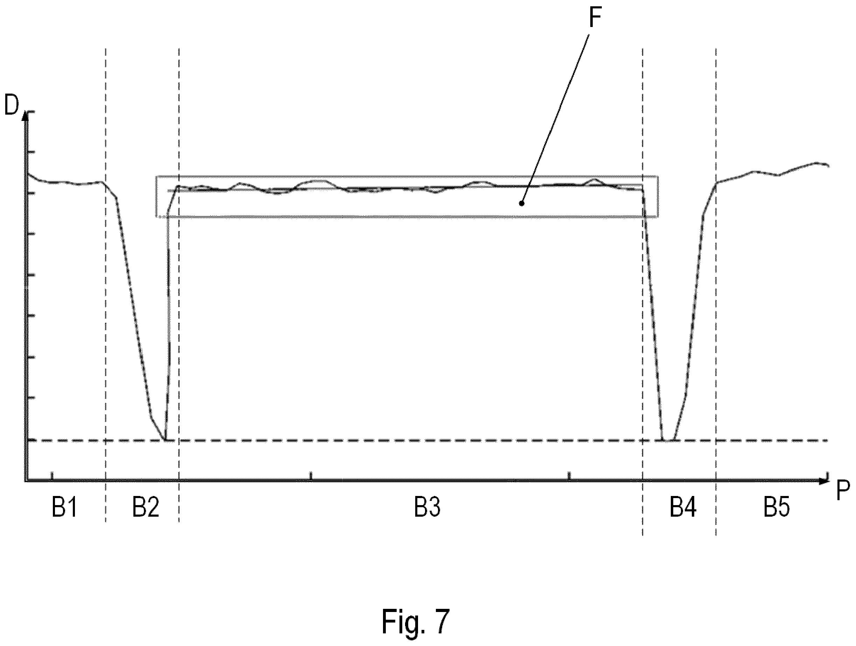

Figur 7 zeigt ein erstes Diagramm mit gemessenen Entfernungen D in Abhängigkeit von der Position P des Laserstrahls L in Querrichtung Y. Die Position P des Laserstrahls L ist dabei in fünf Abschnitte B1, B2, B3, B4, B5 unterteilt.

In dem ersten Abschnitt B1 trifft der Laserstrahl L seitlich an dem einen Fuß 6 vorbei auf den Schirm 5 und wird von der dritten Reflexionsfläche 33 reflektiert. In dem zweiten Abschnitt B2 trifft der Laserstrahl L auf den einen Fuß 6 und wird von diesem reflektiert. In dem dritten Abschnitt B3 trifft der Laserstrahl L durch den Spalt 19 hindurch auf den Schirm 5 und wird von der dritten Reflexionsfläche 33 reflektiert. In dem vierten Abschnitt B4 trifft der Laserstrahl L auf den anderen Fuß 6 und wird von diesem reflektiert. In dem fünften Abschnitt B5 trifft der Laserstrahl L seitlich an dem anderen Fuß 6 vorbei auf den Schirm 5 und wird von der dritten Reflexionsfläche 33 reflektiert.

Ein vorgegebenes Zielfeld F in dem ersten Diagramm beschreibt die Entfernung D des Laserscanners 3 zu dem Schirm 5 mit vorgegebenen Toleranzen. Innerhalb des dritten Abschnitts B3 liegt die gemessene Entfernung D innerhalb des besagten Zielfeldes F. Der Laserstrahl L verläuft also in eine horizontale Richtung, und der Laserscanner 3 ist horizontal ausgerichtet.

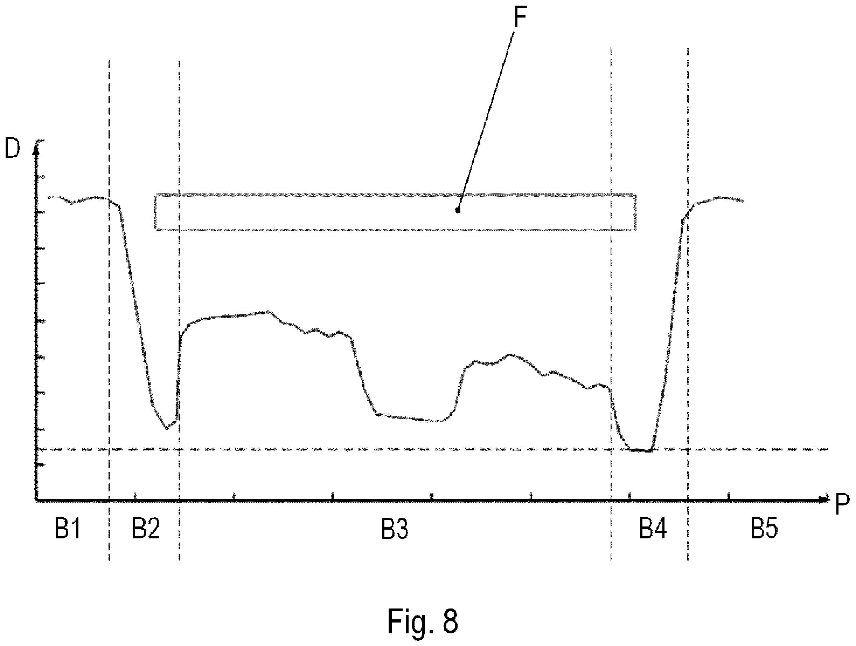

Figur 8 zeigt ein zweites Diagramm mit gemessenen Entfernungen D in Abhängigkeit von der Position P des Laserstrahls L in Querrichtung Y. Die Position P des Laserstrahls L ist dabei in fünf Abschnitte B1, B2, B3, B4, B5 unterteilt.

In dem ersten Abschnitt B1 trifft der Laserstrahl L seitlich an dem einen Fuß 6 vorbei auf den Schirm 5 und wird von der dritten Reflexionsfläche 33 reflektiert. In dem zweiten Abschnitt B2 trifft der Laserstrahl L auf den dritten Reflexionsbereich 14 des zweiten Schildes 8 und wird von diesem reflektiert. In dem dritten Abschnitt B3 trifft der Laserstrahl L abwechselnd auf den ersten Reflexionsbereich 12 und den zweiten Reflexionsbereich 13 des zweiten Schildes 8 und wird von diesen jeweils reflektiert. In dem vierten Abschnitt B4 trifft der Laserstrahl L auf den vierten Reflexionsbereich 15 des zweiten Schildes 8 und wird von diesem reflektiert. In dem fünften Abschnitt B5 trifft der Laserstrahl L seitlich an dem anderen Fuß 6 vorbei auf den Schirm 5 und wird von der dritten Reflexionsfläche 33 reflektiert.

Ein vorgegebenes Zielfeld F in dem zweiten Diagramm beschreibt die Entfernung D des Laserscanners 3 zu dem Schirm 5 mit vorgegebenen Toleranzen. Innerhalb des dritten Abschnitts B3 liegt die gemessene Entfernung D außerhalb des besagten Zielfeldes F. Die gemessene Entfernung D in dem dritten Abschnitt B3 ändert sich dabei sprunghaft, bedingt durch die unterschiedlichen Reflexionseigenschaften des ersten Reflexionsbereichs 12 und des zweiten Reflexionsbereichs 13. Der Laserstrahl L verläuft also in Vertikalrichtung Z nach unten, und der Laserscanner 3 ist in Vertikalrichtung Z nach unten, also auf den Boden zu, geneigt.

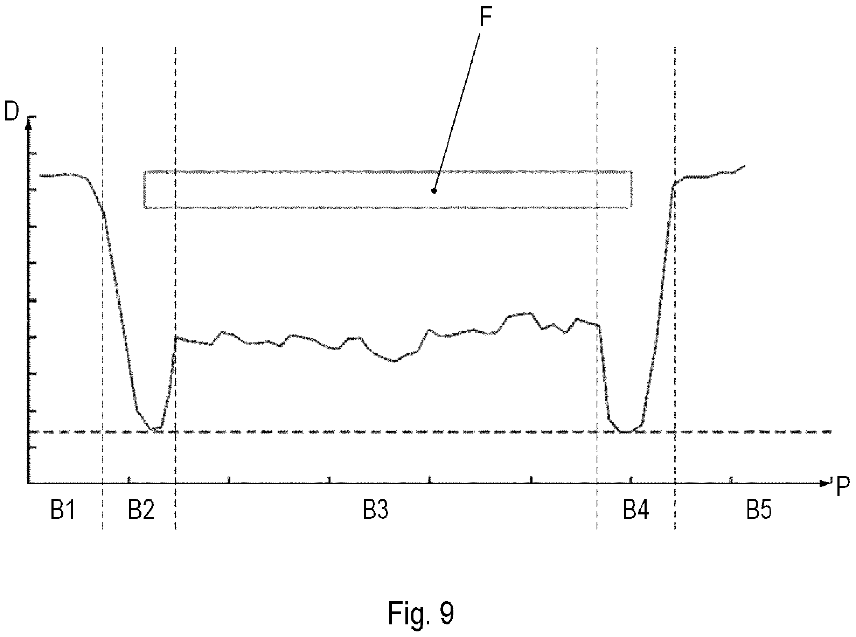

Figur 9 zeigt ein drittes Diagramm mit gemessenen Entfernungen D in Abhängigkeit von der Position P des Laserstrahls L in Querrichtung Y. Die Position P des Laserstrahls L ist dabei in fünf Abschnitte B1, B2, B3, B4, B5 unterteilt.

In dem ersten Abschnitt B1 trifft der Laserstrahl L seitlich an dem einen Fuß 6 vorbei auf den Schirm 5 und wird von der dritten Reflexionsfläche 33 reflektiert. In dem zweiten Abschnitt B2 trifft der Laserstrahl L auf den einen Fuß 6 und wird von diesem reflektiert. In dem dritten Abschnitt B3 trifft der Laserstrahl L auf den ersten Schild 7 und wird von der ersten Reflexionsfläche 31 reflektiert. In dem vierten Abschnitt B4 trifft der Laserstrahl L auf den anderen Fuß 6 und wird von diesem reflektiert. In dem fünften Abschnitt B5 trifft der Laserstrahl L seitlich an dem anderen Fuß 6 vorbei auf den Schirm 5 und wird von der dritten Reflexionsfläche 33 reflektiert.

Ein vorgegebenes Zielfeld F in dem dritten Diagramm beschreibt die Entfernung D des Laserscanners 3 zu dem Schirm 5 mit vorgegebenen Toleranzen. Innerhalb des dritten Abschnitts B3 liegt die gemessene Entfernung D außerhalb des besagten Zielfeldes F. Die gemessene Entfernung D in dem dritten Abschnitt B3 ist annähernd konstant. Der Laserstrahl L verläuft also in Vertikalrichtung Z nach oben, und der Laserscanner 3 ist in Vertikalrichtung Z nach oben, also von dem Boden weg, geneigt.

### Bezugszeichenliste

- 2: Fahrzeug
- 3: Laserscanner
- 4: Digitalrechner
- 5: Schirm
- 6: Fuß
- 7: erster Schild
- 8: zweiter Schild
- 9: Spalt
- 10: Abstandshalter
- 11: Blende
- 12: erster Reflexionsbereich
- 13: zweiter Reflexionsbereich
- 14: dritter Reflexionsbereich
- 15: vierter Reflexionsbereich
- 16: Querstrebe
- 21: erste Reflexionseinheit
- 22: zweite Reflexionseinheit
- 31: erste Reflexionsfläche
- 32: zweite Reflexionsfläche
- 33: dritte Reflexionsfläche

- A1: erster Abstand
- A2: zweiter Abstand
- B1: erster Abschnitt
- B2: zweiter Abschnitt
- B3: dritter Abschnitt
- B4: vierter Abschnitt
- B5: fünfter Abschnitt
- D: Entfernung
- F: Zielfeld
- L: Laserstrahl
- P: Position
- S: Strahlrichtung
- Y: Querrichtung
- Z: Vertikalrichtung

## Patentansprüche

1. Vorrichtung zur Kalibrierung eines Laserscanners (3), insbesondere eines Fahrzeugs (2), umfassend mindestens eine Reflexionseinheit (21, 22) zur Reflexion eines Laserstrahls (L) des Laserscanners (3), wobei
die mindestens eine Reflexionseinheit (21, 22) einen ersten Schild (7), einen zweiten Schild (8) und einen Schirm (5) umfasst, wobei
der erste Schild (7) in einer Strahlrichtung (S) zwischen dem zweiten Schild (8) und dem Schirm (5) angeordnet ist, wobei
der erste Schild (7) eine erste Reflexionsfläche (31) aufweist, die sich zumindest annähernd rechtwinklig zu der Strahlrichtung (S) erstreckt, und
der zweite Schild (8) eine zweite Reflexionsfläche (32) aufweist, die sich zumindest annähernd rechtwinklig zu der Strahlrichtung (S) erstreckt, und
der Schirm (5) eine dritte Reflexionsfläche (33) aufweist, die sich zumindest annähernd rechtwinklig zu der Strahlrichtung (S) erstreckt, wobei
der erste Schild (7) in einer Vertikalrichtung (Z) derart versetzt zu dem zweiten Schild (8) angeordnet ist, dass zwischen dem ersten Schild (7) und dem zweiten Schild (8) ein Spalt (9) gebildet ist, der sich in die Vertikalrichtung (Z) und in eine Querrichtung (Y) erstreckt, und wobei der Schirm (5) derart ausgebildet und angeordnet ist, dass
eine Projektion des Spalts (9) in Strahlrichtung (S) vollständig auf die dritte Reflexionsfläche (33) des Schirms (5) fällt, wobei
die Vertikalrichtung (Z) sich rechtwinklig zu der Strahlrichtung (S) und zu der Querrichtung (Y) erstreckt,
**dadurch gekennzeichnet, dass**
die Vertikalrichtung (Z) rechtwinklig zu einem Boden verläuft, auf welchem die Reflexionseinheit steht, und dass
eine Ausdehnung der dritten Reflexionsfläche (33) des Schirms (5) in Vertikalrichtung (Z) größer ist als eine Ausdehnung des Spalts (9) in Vertikalrichtung (Z), und dass
eine Ausdehnung der dritten Reflexionsfläche (31) des Schirms (5) in Querrichtung (Y) größer ist als eine Ausdehnung des Spalts (9) in Querrichtung (Y).

2. Vorrichtung nach Anspruch 1, **dadurch gekennzeichnet, dass**
die Vorrichtung eine erste Reflexionseinheit (21) und eine zweite Reflexionseinheit (22) umfasst, welche derart ausgerichtet sind, dass
die Strahlrichtung (S) der ersten Reflexionseinheit (21) sich zumindest annähernd rechtwinklig zu der Strahlrichtung (S) der zweiten Reflexionseinheit (22) erstreckt.

3. Vorrichtung nach Anspruch 2, **dadurch gekennzeichnet, dass**
die erste Reflexionseinheit (21) und die zweite Reflexionseinheit (22) derart ausgerichtet sind, dass
die Strahlrichtung (S) der ersten Reflexionseinheit (21) sich zumindest annähernd parallel zu der Querrichtung (Y) der zweiten Reflexionseinheit (22) erstreckt.

4. Vorrichtung nach einem der Ansprüche 2 bis 3, **dadurch gekennzeichnet, dass**
die erste Reflexionseinheit (21) und die zweite Reflexionseinheit (22) derart ausgerichtet sind, dass
die Vertikalrichtung (Z) der ersten Reflexionseinheit (21) sich parallel zu der Vertikalrichtung (Z) der zweiten Reflexionseinheit (22) erstreckt.

5. Vorrichtung nach einem der Ansprüche 2 bis 4, **dadurch gekennzeichnet, dass**
die erste Reflexionseinheit (21) und die zweite Reflexionseinheit (22) derart ausgerichtet sind, dass
der Spalt (9) der ersten Reflexionseinheit (21) und der Spalt (9) der zweiten Reflexionseinheit (22)
in der Vertikalrichtung (Z) miteinander fluchten.

6. Vorrichtung nach mindestens einem der vorangegangenen Ansprüche,
**dadurch gekennzeichnet, dass**
die mindestens eine Reflexionseinheit (21, 22) mindestens einen Abstandshalter (10) aufweist, welcher derart angeordnet ist, dass
der erste Schild (7) und der Schirm (5) in der Strahlrichtung (S) um einen ersten Abstand (A1) versetzt zueinander angeordnet sind.

7. Vorrichtung nach mindestens einem der vorangegangenen Ansprüche,
**dadurch gekennzeichnet, dass**
die mindestens eine Reflexionseinheit (21, 22) mindestens einen Fuß (6) aufweist,
welcher sich vorwiegend in die Vertikalrichtung (Z) erstreckt, und
welcher derart angeordnet ist, dass
der erste Schild (7) und der zweite Schild (8) in der Strahlrichtung (S) um einen zweiten Abstand (A2) versetzt zueinander angeordnet sind.

8. Vorrichtung nach mindestens einem der vorangegangenen Ansprüche,
**dadurch gekennzeichnet, dass**
die mindestens eine Reflexionseinheit (21, 22) mindestens eine Blende (11) aufweist,
welche in der Querrichtung (Y) neben dem zweiten Schild (8) und/oder neben dem ersten Schild (7) angeordnet ist, und dass
die mindestens eine Blende (11) mindestens zwei Reflexionsflächen aufweist, welche geneigt zueinander angeordnet sind.

9. Vorrichtung nach mindestens einem der vorangegangenen Ansprüche,
**dadurch gekennzeichnet, dass**
die erste Reflexionsfläche (31) des ersten Schildes (7) und/oder die zweite Reflexionsfläche (32) des zweiten Schildes (8) einen ersten Reflexionsbereich (12) und einen zweiten Reflexionsbereich (13) umfasst, wobei
die Reflexionsbereiche (12, 13) verschiedenartige Reflexionseigenschaften, insbesondere verschiedenartige Farben und/oder verschiedenartige Oberflächenmaterialien, aufweisen.

10. Vorrichtung nach mindestens einem der vorangegangenen Ansprüche,
**dadurch gekennzeichnet, dass**
die erste Reflexionsfläche (31) des ersten Schildes (7) und/oder der erste Reflexionsbereich (12) der zweiten Reflexionsfläche (32) des zweiten Schildes (8) mit schwarzem Schaumstoff verkleidet sind.

11. Vorrichtung nach mindestens einem der vorangegangenen Ansprüche,
**dadurch gekennzeichnet, dass**
zumindest die Kanten des ersten Schildes (7) und/oder des zweiten Schildes (8) angrenzend an den Spalt (9) der Reflexionseinheit (21, 22) mit schwarzem Schaumstoff verkleidet sind.

12. Verfahren zur Kalibrierung eines Laserscanners (3), insbesondere eines Fahrzeugs (2), mittels einer Vorrichtung nach mindestens einem der vorangegangenen Ansprüche,
**dadurch gekennzeichnet, dass**
ein Laserstrahl (L) des Laserscanners (3) auf die mindestens eine Reflexionseinheit (21, 22) zumindest annähernd in der Strahlrichtung (S) gerichtet wird, und
der Laserstrahl (L) in der Querrichtung (Y) entlang der mindestens einen Reflexionseinheit (21, 22) bewegt wird, und dass
für mehrere Positionen (P) des Laserstrahls (L) in der Querrichtung (Y) jeweils eine Entfernung (D) des Laserscanners (3) zu derjenigen Reflexionsfläche (31, 32, 33) gemessen wird, von welcher der Laserstrahl (L) reflektiert wird, und dass
aus den gemessenen Entfernungen (D) des Laserscanners (3) zu der jeweiligen Reflexionsfläche (31, 32, 33) eine Ausrichtung des Laserscanners (3) ermittelt wird.

13. Verfahren nach Anspruch 12, **dadurch gekennzeichnet, dass**
die Vorrichtung eine erste Reflexionseinheit (21) und eine zweite Reflexionseinheit (22) umfasst, welche derart ausgerichtet sind, dass
die Strahlrichtung (S) der ersten Reflexionseinheit (21) sich zumindest annähernd rechtwinklig zu der Strahlrichtung (S) der zweiten Reflexionseinheit (22) erstreckt, wobei der Laserstrahl (L) des Laserscanners (3) auf die erste Reflexionseinheit (21) zumindest annähernd in der Strahlrichtung (S) der ersten Reflexionseinheit (21) gerichtet wird, und
der Laserstrahl (L) in der Querrichtung (Y) der ersten Reflexionseinheit (21) entlang der ersten Reflexionseinheit (21) bewegt wird, und dass
für mehrere Positionen (P) des Laserstrahls (L) in der Querrichtung (Y) jeweils eine Entfernung (D) des Laserscanners (3) zu derjenigen Reflexionsfläche (31, 32, 33) der ersten Reflexionseinheit (21) gemessen wird, von welcher der Laserstrahl (L) reflektiert wird, und dass der Laserstrahl (L) des Laserscanners (3) auf die zweite Reflexionseinheit (22) zumindest annähernd in der Strahlrichtung (S) der zweiten Reflexionseinheit (22) gerichtet wird, und
der Laserstrahl (L) in der Querrichtung (Y) der zweiten Reflexionseinheit (22) entlang der zweiten Reflexionseinheit (22) bewegt wird, und dass
für mehrere Positionen (P) des Laserstrahls (L) in der Querrichtung (Y) jeweils eine Entfernung (D) des Laserscanners (3) zu derjenigen Reflexionsfläche (31, 32, 33) der zweiten Reflexionseinheit (22) gemessen wird, von welcher der Laserstrahl (L) reflektiert wird.

14. Verfahren nach einem der Ansprüche 12 bis 13, **dadurch gekennzeichnet, dass** die ermittelte Ausrichtung des Laserscanners (3) optisch und/oder akustisch dargestellt wird.

## Claims

1. Device for calibrating a laser scanner (3), in particular of a vehicle (2),
said device comprising at least one reflection unit (21, 22) for reflecting a laser beam (L) of the laser scanner (3),
the at least one reflection unit (21, 22) comprising a first plate (7), a second plate (8) and a screen (5),
the first plate (7) being arranged between the second plate (8) and the screen (5) in a beam direction (S),
the first plate (7) having a first reflection surface (31) extending at least approximately at right angles to the beam direction (S), and
the second plate (8) having a second reflection surface (32) extending at least approximately at right angles to the beam direction (S), and
the screen (5) having a third reflection surface (33) extending at least approximately at right angles to the beam direction (S),
the first plate (7) being arranged at an offset from the second plate (8) in a vertical direction (Z) in such a way that a gap (9) is formed between the first plate (7) and the second plate (8), said gap extending in the vertical direction (Z) and in a transverse direction (Y), and the screen (5) being formed and arranged such that
a projection of the gap (9) in the beam direction (S) lands entirely on the third reflection surface (33) of the screen (5),
the vertical direction (Z) extending at right angles to the beam direction (S) and to the transverse direction (Y),
**characterised in that**
the vertical direction (Z) runs at right angles to a floor on which the reflection unit stands, and **in that**
an extent of the third reflection surface (33) of the screen (5) in the vertical direction (Z) is greater than an extent of the gap (9) in the vertical direction (Z), and **in that**
an extent of the third reflection surface (31) of the screen (5) in the transverse direction (Y) is greater than an extent of the gap (9) in the transverse direction (Y).

2. Device according to claim 1,
**characterised in that**
the device comprises a first reflection unit (21) and a second reflection unit (22), which are oriented such that
the beam direction (S) of the first reflection unit (21) extends at least approximately at right angles to the beam direction (S) of the second reflection unit (22).

3. Device according to claim 2,
**characterised in that**
the first reflection unit (21) and the second reflection unit (22) are oriented such that the beam direction (S) of the first reflection unit (21) extends at least approximately in parallel with the transverse direction (Y) of the second reflection unit (22).

4. Device according to any of claims 2 to 3,
**characterised in that**
the first reflection unit (21) and the second reflection unit (22) are oriented such that the vertical direction (Z) of the first reflection unit (21) extends in parallel with the vertical direction (Z) of the second reflection unit (22).

5. Device according to any of claims 2 to 4,
**characterised in that**
the first reflection unit (21) and the second reflection unit (22) are oriented such that the gap (9) of the first reflection unit (21) and the gap (9) of the second reflection unit (22) are aligned in the vertical direction (Z).

6. Device according to at least one of the preceding claims,
**characterised in that**
the at least one reflection unit (21, 22) has at least one spacer (10) which is arranged such that the first plate (7) and the screen (5) are arranged so as to be offset from one another by a first spacing (A1) in the beam direction (S).
PT

7. Device according to at least one of the preceding claims,
**characterised in that**
the at least one reflection unit (21, 22) has at least one footing (6) which extends predominantly in the vertical direction (Z) and which is arranged such that the first plate (7) and the second plate (8) are arranged so as to be offset from one another by a second spacing (A2) in the beam direction (S).

8. Device according to at least one of the preceding claims,
**characterised in that**
the at least one reflection unit (21, 22) has at least one shield (11) which is arranged next to the second plate (8) and/or next to the first plate (7) in the transverse direction (Y), and **in that**
the at least one shield (11) has at least two reflection surfaces which are arranged at an angle to one another.

9. Device according to at least one of the preceding claims,
**characterised in that**
the first reflection surface (31) of the first plate (7) and/or the second reflection surface (32) of the second plate (8) comprise(s) a first reflection region (12) and a second reflection region (13),
the reflection regions (12, 13) having different reflective properties, in particular different colours and/or different surface materials.

10. Device according to at least one of the preceding claims,
**characterised in that**
the first reflection surface (31) of the first plate (7) and/or the first reflection region (12) of the second reflection surface (32) of the second plate (8) is/are covered with black foam.

11. Device according to at least one of the preceding claims,
**characterised in that**
at least the edges of the first plate (7) and/or of the second plate (8) that adjoin the gap (9) of the reflection unit (21, 22) are covered with black foam.

12. Method for calibrating a laser scanner (3), in particular of a vehicle (2), by means of a device according to at least one of the preceding claims,
**characterised in that**
a laser beam (L) of the laser scanner (3) is directed at the at least one reflection unit (21, 22) at least approximately in the beam direction (S), and the laser beam (L) is moved along the at least one reflection unit (21, 22) in the transverse direction (Y), and **in that**
for each of a plurality of positions (P) of the laser beam (L) in the transverse direction (Y), a distance (D) from the laser scanner (3) to the reflection surface (31, 32, 33) that reflects the laser beam (L) is measured, and **in that**
an orientation of the laser scanner (3) is determined from the measured distances (D) from the laser scanner (3) to each reflection surface (31, 32, 33).

13. Method according to claim 12,
**characterised in that**
the device comprises a first reflection unit (21) and a second reflection unit (22), which are oriented such that the beam direction (S) of the first reflection unit (21) extends at least approximately at right angles to the beam direction (S) of the second reflection unit (22), the laser beam (L) of the laser scanner (3) being directed at the first reflection unit (21) at least approximately in the beam direction (S) of the first reflection unit (21), and the laser beam (L) being moved along the first reflection unit (21) in the transverse direction (Y) of the first reflection unit (21), and **in that**
for each of a plurality of positions (P) of the laser beam (L) in the transverse direction (Y), a distance (D) from the laser scanner (3) to that reflection surface (31, 32, 33) of the first reflection unit (21) which reflects the laser beam (L) is measured, and **in that**
the laser beam (L) of the laser scanner (3) is directed at the second reflection unit (22) at least approximately in the beam direction (S) of the second reflection unit (22), and the laser beam (L) is moved along the second reflection unit (22) in the transverse direction (Y) of the second reflection unit (22), and **in that**
for each of a plurality of positions (P) of the laser beam (L) in the transverse direction (Y), a distance (D) between the laser scanner (3) and that reflection surface (31, 32, 33) of the second reflection unit (22) which reflects the laser beam (L) is measured.

14. Method according to any of claims 12 to 13,
**characterised in that**
the determined orientation of the laser scanner (3) is displayed optically and/or acoustically.

## Revendications

1. Dispositif d'étalonnage d'un scanner laser (3), en particulier d'un véhicule (2), comprenant au moins une unité de réflexion (21, 22) permettant de réfléchir un faisceau laser (L) du scanner laser (3),
la au moins une unité de réflexion (21, 22) comprenant un premier panneau (7), un second panneau (8) et un écran (5),
le premier panneau (7) étant agencé dans une direction de faisceau (S) entre le second panneau (8) et l'écran (5),
le premier panneau (7) présentant une première surface de réflexion (31) qui s'étend de manière au moins approximativement perpendiculaire par rapport à la direction de faisceau (S), et
le second panneau (8) présentant une deuxième surface de réflexion (32) qui s'étend de manière au moins approximativement perpendiculaire par rapport à la direction de faisceau (S), et
l'écran (5) présentant une troisième surface de réflexion (33) qui s'étend de manière au moins approximativement perpendiculaire par rapport à la direction de faisceau (S), le premier panneau (7) étant agencé dans une direction verticale (Z) de manière décalée par rapport au second panneau (8), de manière à former entre le premier panneau (7) et le second panneau (8) une fente (9) qui s'étend dans la direction verticale (Z) et dans une direction transversale (Y), et
l'écran (5) étant réalisé et agencé de telle manière que
une projection de la fente (9) dans la direction de faisceau (S) arrive entièrement sur la troisième surface de réflexion (33) de l'écran (5),
la direction verticale (Z) s'étendant de manière perpendiculaire par rapport à la direction de faisceau (S) et par rapport à la direction transversale (Y),
**caractérisé en ce que**
la direction verticale (Z) est perpendiculaire à un sol sur lequel se trouve l'unité de réflexion, et **en ce que**
une extension de la troisième surface de réflexion (33) de l'écran (5) dans la direction verticale (Z) est supérieure à une extension de la fente (9) dans la direction verticale (Z), et **en ce que**
une extension de la troisième surface de réflexion (31) de l'écran (5) dans la direction transversale (Y) est supérieure à une extension de la fente (9) dans la direction transversale (Y).

2. Dispositif selon la revendication 1,
**caractérisé en ce que**
le dispositif comprend une première unité de réflexion (21) et une seconde unité de réflexion (22) qui sont orientées de telle manière que
la direction de faisceau (S) de la première unité de réflexion (21) s'étend de manière au moins approximativement perpendiculaire par rapport à la direction de faisceau (S) de la seconde unité de réflexion (22).

3. Dispositif selon la revendication 2, **caractérisé en ce que**
la première unité de réflexion (21) et la seconde unité de réflexion (22) sont orientées de telle manière que
la direction de faisceau (S) de la première unité de réflexion (21) s'étend de manière au moins approximativement perpendiculaire par rapport à la direction de faisceau (S) de la seconde unité de réflexion (22).

4. Dispositif selon l'une quelconque des revendications 2 à 3, **caractérisé en ce que** la première unité de réflexion (21) et la deuxième unité de réflexion (22) sont orientées de telle manière que
la direction verticale (Z) de la première unité de réflexion (21) s'étend parallèlement à la direction verticale (Z) de la seconde unité de réflexion (22).

5. Dispositif selon l'une quelconque des revendications 2 à 4, **caractérisé en ce que** la première unité de réflexion (21) et la seconde unité de réflexion (22) sont orientées de telle manière que
la fente (9) de la première unité de réflexion (21) et la fente (9) de la seconde unité de réflexion (22) sont alignées l'une avec l'autre dans la direction verticale (Z).

6. Dispositif selon au moins l'une quelconque des revendications précédentes,
**caractérisé en ce que**
la au moins une unité de réflexion (21, 22) présente au moins une entretoise (10) qui est agencée de telle manière que
le premier panneau (7) et l'écran (5) sont agencés de manière décalée l'un par rapport à l'autre dans la direction de faisceau (S) à raison d'une première distance (A1).

7. Dispositif selon au moins l'une quelconque des revendications précédentes,
**caractérisé en ce que**
la au moins une unité de réflexion (21, 22) présente au moins un pied (6) qui s'étend principalement dans la direction verticale (Z) et qui est agencé de telle manière que le premier panneau (7) et le second panneau (8) sont agencés de manière décalée l'un par rapport à l'autre dans la direction de faisceau (S) à raison d'une seconde distance (A2).

8. Dispositif selon au moins l'une quelconque des revendications précédentes,
**caractérisé en ce que**
la au moins une unité de réflexion (21, 22) présente au moins un diaphragme (11) qui est agencé dans la direction transversale (Y) à côté du second panneau (8) et/ou à côté du premier panneau (7), et **en ce que**
le au moins un diaphragme (11) présente au moins deux surfaces de réflexion qui sont agencées de manière inclinée l'une par rapport à l'autre.

9. Dispositif selon au moins l'une quelconque des revendications précédentes,
**caractérisé en ce que**
la première surface de réflexion (31) du premier panneau (7) et/ou la deuxième surface de réflexion (32) du second panneau (8) comprend ou comprennent une première région de réflexion (12) et une seconde région de réflexion (13),
les régions de réflexion (12, 13) présentant des propriétés de réflexion différentes, en particulier des couleurs différentes et/ou des matériaux de surface différents.

10. Dispositif selon au moins l'une quelconque des revendications précédentes,
**caractérisé en ce que**
la première surface de réflexion (31) du premier panneau (7) et/ou la première région de réflexion (12) de la deuxième surface de réflexion (32) du second panneau (8) est/sont revêtue(s) de mousse noire.

11. Dispositif selon au moins l'une quelconque des revendications précédentes,
**caractérisé en ce que**
au moins les bords du premier panneau (7) et/ou du second panneau (8) adjacents à la fente (9) de l'unité de réflexion (21, 22) sont revêtus de mousse noire.

12. Procédé d'étalonnage d'un scanner laser (3), en particulier d'un véhicule (2), au moyen d'un dispositif selon au moins l'une quelconque des revendications précédentes,
**caractérisé en ce que**
un faisceau laser (L) du scanner laser (3) est dirigé vers la au moins une unité de réflexion (21, 22) au moins approximativement dans la direction de faisceau (S), et le faisceau laser (L) est déplacé le long de la au moins une unité de réflexion (21, 22) dans la direction transversale (Y), et **en ce que**
pour plusieurs positions (P) du faisceau laser (L) dans la direction transversale (Y), respectivement une distance (D) entre le scanner laser (3) et la surface de réflexion (31, 32, 33) à partir de laquelle le faisceau laser (L) est réfléchi est mesurée, et **en ce que**
une orientation du scanner laser (3) est déterminée à partir des distances (D) mesurées entre le scanner laser (3) et la surface de réflexion (31, 32, 33) respective.

13. Procédé selon la revendication 12, **caractérisé en ce que**
le dispositif comprend une première unité de réflexion (21) et une seconde unité de réflexion (22) qui sont orientées de telle manière que
la direction de faisceau (S) de la première unité de réflexion (21) s'étend de manière au moins approximativement perpendiculaire par rapport à la direction de faisceau (S) de la seconde unité de réflexion (22),
le faisceau laser (L) du scanner laser (3) étant dirigé vers la première unité de réflexion (21) au moins approximativement dans la direction de faisceau (S) de la première unité de réflexion (21), et le faisceau laser (L) étant déplacé le long de la première unité de réflexion (21) dans la direction transversale (Y) de la première unité de réflexion (21), et **en ce que**
pour plusieurs positions (P) du faisceau laser (L) dans la direction transversale (Y), respectivement une distance (D) entre le scanner laser (3) et la surface de réflexion (31, 32, 33) de la première unité de réflexion (21) à partir de laquelle le faisceau laser (L) est réfléchi est mesurée, et **en ce que**
le faisceau laser (L) du scanner laser (3) est dirigé vers la seconde unité de réflexion (22) au moins approximativement dans la direction de faisceau (S) de la seconde unité de réflexion (22), et
le faisceau laser (L) est déplacé le long de la seconde unité de réflexion (22) dans la direction transversale (Y) de la seconde unité de réflexion (22), et **en ce que**
pour plusieurs positions (P) du faisceau laser (L) dans la direction transversale (Y), respectivement une distance (D) entre le scanner laser (3) et la surface de réflexion (31, 32, 33) de la seconde unité de réflexion (22) à partir de laquelle le faisceau laser (L) est réfléchi est mesurée.

14. Procédé selon l'une quelconque des revendications 12 à 13, **caractérisé en ce que** l'orientation déterminée du scanner laser (3) est représentée de manière optique et/ou acoustique.
